# EUROPEAN PATENT SPECIFICATION

(11) **EP 3 736 437 B1**
(45) Date of publication and mention of the grant of the patent: **03.09.2025**
(21) Application number: 19173557.0
(22) Date of filing: 09.05.2019
(51) Int. Cl.: F03D 1/06, F03D 7/02

(54) **TRAILING EDGE ASSEMBLY**
HINTERKANTENANORDNUNG
ENSEMBLE DE BORD DE FUITE

(43) Date of publication of application: 11.11.2020
(73) Proprietor: Siemens Gamesa Renewable Energy A/S, 7330 Brande (DK)
(72) Inventor: REYES SOTOMAYOR, Sergio, 85521 Ottobrunn (DE); ENEVOLDSEN, Peter Bay, 107100 Vejle (DK); LAURSEN, Jesper Monrad, 8600 Silkeborg (DE)
(74) Representative: SGRE-Association

(56) References cited:
- WO-A1-2012/095478
- CN-B- 101 158 332
- DE-A1- 10 064 912
- DE-A1- 10 233 102

## Description

The invention describes a wind turbine rotor blade with a chord-adjustable trailing edge assembly.

A wind turbine rotor blade is conventionally constructed to have an essentially circular root section for mounting to a pitch ring, an aerodynamically shaped airfoil with low thickness-to-chord ratio, and a distinct "shoulder" between the root section and the airfoil. The chord is widest at the beginning of the airfoil section and reduces gradually towards the outer blade tip. Ideally, the widest airfoil would be close to the root end, so that the blade would extract the maximum amount of energy from the wind. However, the design of a wind turbine rotor blade is generally somewhat removed from the ideal shape, because a rotor blade must also be able to withstand strong wind loads if damage to the rotor blade is to be avoided. The ideal wide airfoil in the root region is not practicable because of the very high loads acting on the rotor blade in high-wind situations, for example. A wide airfoil is generally also not practicable owing to constraints in the manufacturing processes, difficulties associated with handling, and the need to minimize transportation costs.

Higher-capacity wind turbines that generate power in the megawatt range generally require very long rotor blades, for example 80 m or longer. These longer rotor blades must also be stiffer than the conventional shorter rotor blades, in order to be able to withstand the higher wind loads. To avoid damage, such long rotor blades benefit from a more slender or narrow design in the root region, without any significant shoulder between root section and airfoil. This slender root design has the added benefit of simplifying manufacture and transport of the rotor blade. However, this type of narrow root cannot contribute to the aerodynamic performance of the rotor blade.

DE 10233102 discloses a rotor for a wind turbine which has blades made from flexible material and inflated. The trailing edge of each blade is fitted with a flexible cover whose sides and tip are bonded to a flexible support.

CN 101158332 discloses a vane which has an inflatable frame structure (1) i.e. projection structure, bonded or jointed by rigid and flexible inflatable frames, according to a need of vane and projection structure. A vane skin (2) of rigid/flexible thin material is bonded or jointed on a surface of the structure or fixed between the frames of the structure.

WO2012095478A1 discloses a blade which has a collapsible section extending along longitudinal direction of the blade and comprising a collapsible part that is collapsible in an extended position. The collapsible section extends longitudinally from a position near or at a tip region of the blade to a position nearer to a root region of the blade.

It is therefore an object of the invention to provide a way of improving the aerodynamic efficiency of a rotor blade.

This object is achieved by the wind turbine rotor blade of claim 1; by the wind turbine of claim 9; and by the method of claim 14 of adjusting a chord length of a wind turbine rotor blade.

A wind turbine rotor blade may be assumed to comprise a root end, an airfoil, and a transition region extending between the root end and the airfoil. According to the invention, the wind turbine rotor blade further comprises a chord-adjustable trailing edge assembly extending over at least a portion of the transition region. The chord-adjustable trailing edge assembly comprises an inflatable support structure; a flexible material arranged to cover the inflatable support structure so as to form an outer flexible skin; and a volume control means realised to adjust the volume of the inflatable support structure on the basis of a desired trailing edge assembly chord length; wherein the rotor blade has a length of at least 80 m or more.

In the context of the invention, the expression "chord-adjustable trailing edge assembly" shall be understood to mean a trailing edge assembly that can be actuated (i.e. partially or completely inflated; partially or completely deflated) to alter chord length of the rotor blade over the installation length of the trailing edge assembly. The installation length of a trailing edge assembly is to be understood as the distance between radial endpoints of that trailing edge assembly, since a trailing edge assembly commences at a first endpoint (closer to the hub) and extends radially outward along the rotor blade to a second endpoint (furthest from the hub).

The flexible material may be assumed to form an essentially airtight cover over the inflatable support structure. Therefore, when the volume of the inflatable support structure is altered, the cross-sectional shape of the rotor blade is altered accordingly. In other words, the inventive chord-adjustable trailing edge assembly can advantageously be deployed to alter the planform of the rotor blade by extending or shortening the chord length(s) as desired. The inventive chord-adjustable trailing edge assembly can therefore increase the aerodynamic performance over that part of the rotor blade as required.

The chord-adjustable trailing edge assembly may be mounted to a trailing edge surface of the rotor blade. Such a trailing edge surface may be a flattened surface between the suction side and the pressure side of the rotor blade, for example. According to the invention, a trailing edge assembly for a wind turbine rotor blade comprises an inflatable support structure realised for mounting onto a trailing edge surface of the rotor blade; a flexible material for attaching to the rotor blade surface to form an airtight cover over the inflatable support structure; and a volume control means for adjusting the volume of the inflatable support structure. According to the invention, the method of adjusting the trailing edge of such a wind turbine rotor blade comprises the steps of detecting a situation permitting a longer chord in an inner blade region, and inflating the support structure to extend the chord length; and/or detecting a situation requiring a shorter chord in the inner blade region, and deflating the support structure to shorten the chord length. Particularly advantageous embodiments and features of the invention are given by the dependent claims, as revealed in the following description. Features of different claim categories may be combined as appropriate to give further embodiments not described herein.

In the context of the invention, the rotor blade has a length of 80 m or more. It may also be assumed that the maximum chord of the rotor blade is at most 115% of the root end diameter, i.e. the blade geometry is slender, with a relatively narrow root extending into at least the first 30% - 50% of the overall blade length.

In the following, without restricting the invention in any way, it may be assumed that the blade root end is essentially circular, for mounting to a circular pitch ring. The wind turbine rotor blade may also be assumed to have an outboard airfoil shape, and a transition region in between that smoothly changes from the circular root end to the airfoil shape in the outboard blade region.

The outer edges of the flexible skin can be attached to the surface of the rotor blade in any suitable manner, for example using glue, tape, fasteners, etc. Preferably, the flexible material comprises an elastic fabric that is taut when support structure is fully inflated. For example, the flexible material can be a 2-way or 4-way stretch fabric made from an appropriate combination of materials such as nylon, polyurethane, elastane, etc.

The chord-adjustable trailing edge assembly may be understood to extend from an "inboard end" at or near the root end, to an "outboard end" near or in the airfoil section. For example, the outboard end may be located at the end of the transition region, i.e. at the beginning of the airfoil section. Equally, the outboard end may be located at some point along the airfoil section between the end of the transition region and the blade tip. Of course, it is also possible for the chord-adjustable trailing edge assembly to extend all along the rotor blade from the root end towards the blade tip.

In one preferred embodiment of the invention, an inflatable support structure comprises a plurality of inflatable elements arranged to lie in a longitudinal direction along the trailing edge surface of the rotor blade. An inflatable element can comprise an elongate flexible hose, chamber, pocket or tube that is connected to a supply of compressed gas.

Alternatively or in addition, an inflatable support structure comprises a plurality of inflatable elements that are connected at specific nodes to form an inflatable "framework". This assembly can be mounted over a trailing edge surface of the rotor blade. The advantage of this type of embodiment is that the inflated framework can have a nonuniform shape with different chord extensions between the inboard end and the outboard end, for example a "shoulder" shape with a maximum chord relatively close to the blade root.

The inflatable support structure is preferably realised to extend a chord of the rotor blade by at least 10%, more preferably at least 25%. This chord extension may be assumed to apply to the fully inflated state of the inflatable support structure. For example, an inflatable framework as described above may be constructed so that a chord at 20% of the blade length is extended up to 50%.

The inflatable elements could be loosely arranged inside the flexible skin, for example a bundle of inflatable hoses can be arranged to fill the flexible skin so that, when the support structure is fully inflated, there are no empty spaces between the hoses. In a particularly preferred embodiment of the invention, adjacent inflatable elements can be bonded together in such a way that they assume a specific structural shape when inflated. Adjacent hoses or chambers can be bonded together along a bonding seam, for example.

In a preferred embodiment of the invention, the chord-adjustable trailing edge assembly comprises a shape-definition mesh extending between attachment points on the rotor blade surface and attachment points in the interior of the chord-adjustable trailing edge assembly. The shape-definition mesh is preferably made of thin wires, cords or bands. For example, a band extending between an inner attachment point on the rotor blade to an outer attachment point on the interior of the trailing edge assembly will effectively define the maximum distance outward from the rotor blade surface. In this way, the mesh can define fixed points on the contour of the trailing edge assembly in its fully inflated state. The mesh can also serve to add structural stability to the chord-adjustable trailing edge assembly, protecting it from damage during sudden wind gusts, for example.

The gas used to inflate the supporting structure may be air. In one possible embodiment, the inflation system may comprise a compressor that takes in air, filters it and pumps it under pressure into the supporting structure. A valve can ensure that the pressurized air does not escape from the inflated supporting structure, and can be opened to allow the supporting structure to deflate again, allowing the air to be expelled.

In a particularly preferred embodiment of the invention, the volume control means comprises a cylinder or other vessel for storing pressurized gas, and a valve to release a quantity of pressurized gas into the inflatable support structure. The gas may be pressurized air, for example. Preferably, the volume control means comprises a regulator to regulate the quantity of pressurized gas released into the inflatable support structure and the quantity of gas that is extracted from the supporting structure. Preferably, the volume control means comprises a vacuum pump for extracting a controlled quantity of gas from the support structure. The extracted air can be compressed again and returned to the storage cylinder in a closed-loop arrangement. The volume regulator can be controlled to release a sufficient quantity of gas into the supporting structure to make it inflate towards its maximum chord extension, for example. Similarly, the volume regulator can be controlled to extract gas from the supporting structure to make it deflate towards its minimum volume. Of course, the volume regulator can be controlled to inflate/deflate the supporting structure to achieve a chord length between the fully retracted state (the achievable minimum chord) and the fully deployed state (the achievable maximum chord).

A situation requiring a narrow root shape may arise when the rotor is parked or idling in extreme wind situations, or at high wind operation beyond the rated power capacity of the wind turbine. A situation that would benefit from a longer chord in the root region is present when the turbine is operating below its rated power capacity. These situations can be detected by monitoring and analysing wind speed, power production and other relevant variables. Typically, a wind turbine will comprise suitable sensors to record data such as wind speed, wind direction and power, and the wind turbine controller can assess the data to decide whether corrective action could or should be taken. In a further preferred embodiment of the invention, therefore, the volume control means is subordinate to a controller of the wind turbine, e.g. the WT controller will issue appropriate commands to the volume control means to initiate inflation or deflation of the trailing edge assembly.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig 1 shows an ideal rotor blade geometry;
Fig 2 shows a practicable geometry for a long rotor blade;
Figs 3 and 4 show an embodiment of the inventive trailing edge assembly mounted to a rotor blade;
Figs 5 - 8 illustrate a further embodiment of the inventive trailing edge assembly mounted to a rotor blade;
Figs 9 - 11 illustrate a further embodiment of the inventive trailing edge assembly mounted to a rotor blade;
Figs 12 and 13 illustrate a further embodiment of the inventive trailing edge assembly mounted to a rotor blade;
Figs 14 - 16 illustrate the operation of a volume control means for an embodiment of the inventive trailing edge assembly.

In the diagrams, like numbers refer to like objects throughout. Objects in the diagrams are not necessarily drawn to scale.

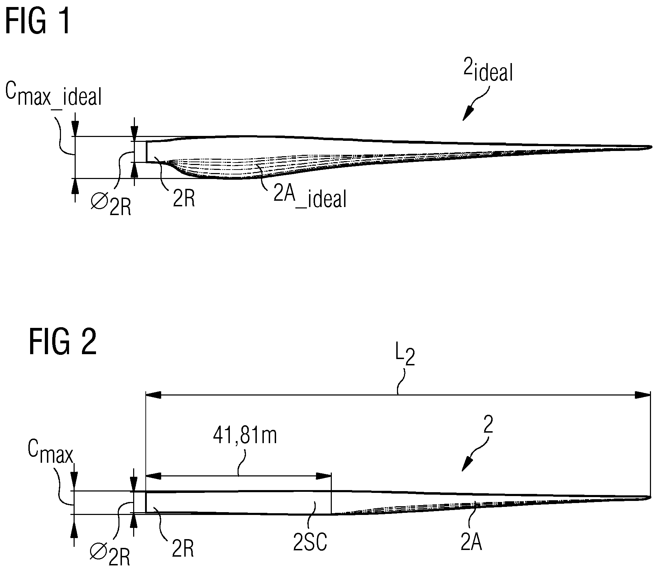

Fig 1 shows the geometry of an ideal rotor blade 2_{ideal}. The diagram shows a distinct airfoil 2A_{_ideal} commencing close to the root end 2R. The maximum chord C_{max_ideal} of this airfoil 2A_{_ideal} is large and is positioned very far inboard, close to the root end 2R and the hub. This rotor blade design would allow a maximum amount of energy to be extracted from the wind. The ideal airfoil has a favourably low thickness-to-chord ratio (ideally 0.2 or less), since the chord is significantly longer than the maximum thickness of the airfoil. However, this ideal shape is not practicable in real life, because high wind loading on such a wide airfoil would lead to structural damage to the rotor blade 2_{ideal}, and would place higher demands on the structural strength of other components such as the generator bearings, the tower and the foundation. Furthermore, manufacturing constraints and transportation constraints also place a limit on the maximum practicable chord length for a long rotor blade. For these reasons, the thickness-to-chord ratio increases towards 1.0 in the root end of a very long rotor blade, thereby lowering the overall efficiency of the rotor blade.

Fig 2 shows a practicable geometry for a long rotor blade 2, e.g. a rotor blade 2 with length L₂ of 80 m or more. The diagram shows that the maximum chord Cₘₐₓ of the rotor blade 2 exceeds the root end diameter Ø_{2R} by only 15% or less, i.e. the blade geometry is slender. Here, the root portion or "short-chord" portion 2SC extends almost over the first half of the overall blade length L₂. The cross-section of the short-chord portion 2SC may be described as oval or egg-shaped, with a chord that is only slightly longer than the thickness (measured perpendicularly to the chord line). This long rotor blade 2 is easier to manufacture, easier to transport, and is also able to avoid the loading problems mentioned above. However, the short-chord portion 2SC cannot make any significant contribution to extracting energy from the wind, so that this rotor blade design is associated with an unfavourable reduction in AEP.

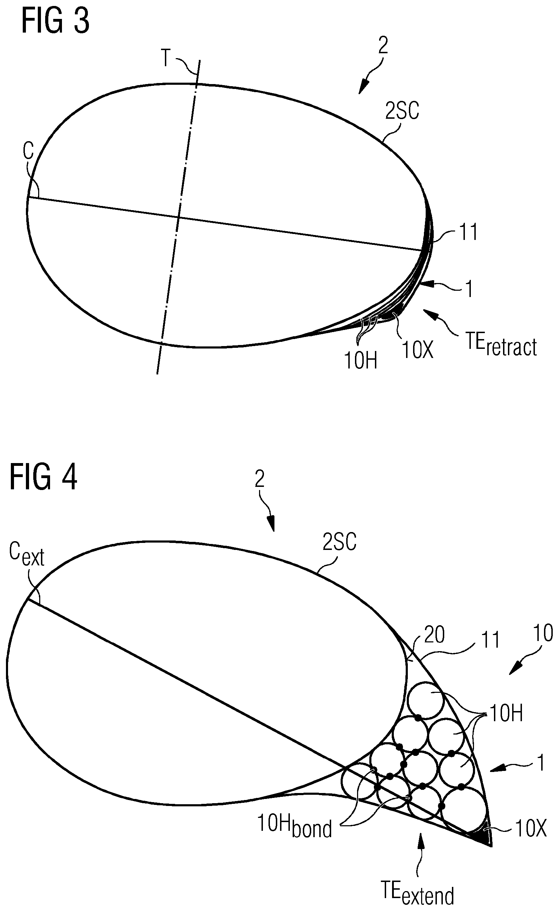

Figs 3 and 4 show an embodiment of the inventive trailing edge assembly 1 mounted along a trailing edge surface 20 of the short-chord portion 2SC of a long rotor blade 2 of the type described in Fig 2 above. The cross-section of the short-chord portion 2SC is oval or egg-shaped, and the chord C is only marginally longer than the section thickness T. In Fig 3, the trailing edge assembly 1 is shown in its fully deflated or retracted state, so that the rotor blade 2 has a flat trailing edge TE_{retract}. Fig 4 shows that this embodiment uses an inflatable support structure 10 comprising a bundle or stack of inflatable hoses 10H, bonded together along their length (indicated by bond points labelled 10H_{bond}) and constrained by an outer flexible skin 11 or cover 11. When pressurized air or gas is channelled into the inflatable hoses 10H, these expand, so that the bundle assumes an overall triangular shape and acts as a chord extension for the rotor blade 2. The outer surface of the inflated or extended trailing edge TE_{extend} is smooth as shown in Fig 4, owing to the flexible skin 11, which is stretched and pulled taut by the inflated tubes 10H in the interior. An outermost hose or tube 10X can have a triangular cross-section as shown here, so that the outermost edge of the inflated trailing edge 1 is well-defined, which can assist in maintaining an attached airflow over this part of the blade 2. The diagram shows that when the trailing edge assembly 1 is inflated, the chord Cₑₓₜ is significantly longer than the section thickness, which is unchanged.

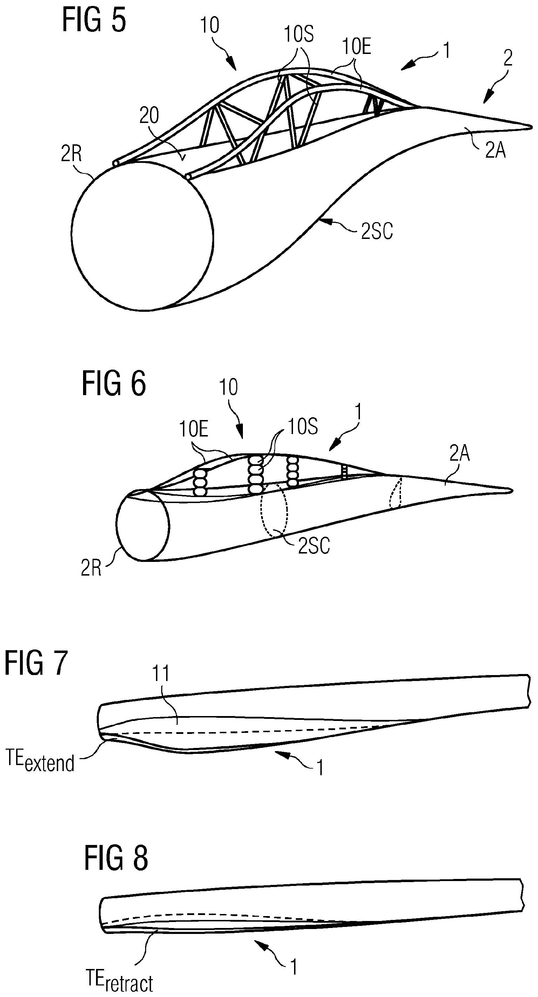

Figs 5 - 8 show a further embodiment of the inventive trailing edge assembly 1 mounted along a trailing edge surface 20 of the short-chord portion 2SC of a long rotor blade 2 of the type described in Fig 2 above. Fig 5 is a perspective view, with the root end 2R closest to the viewer. The trailing edge assembly 1 may be mounted over the inboard 30 - 50% of the rotor blade length, for example. Figs 5 and 6 show two alternate versions and omit the outer flexible skin 11 for clarity, while Figs 7 and 8 show the flexible skin 11 but conceal the inflatable elements.

Fig 6 shows that the cross-section of the short-chord portion 2SC is initially circular at the root end 2R, and gradually becomes more oval or egg-shaped before transitioning to the airfoil 2A in the outboard end of the blade 2.

In the embodiment shown in Fig 5, the trailing edge assembly 1 comprises an inflatable framework 10 with inflatable struts 10S and inflatable edge tubes 10E. Fig 6 shows a similar embodiment, also with an inflatable framework made of inflatable struts 10S and inflatable edge tubes 10E. Fig 5 and Fig 6 show the framework in its inflated state. The outer surface of the inflated or extended trailing edge TE_{extend} is smooth as shown in Fig 7. Fig 8 shows the trailing edge assembly 1 in its retracted state, so that the rotor blade has a flatter trailing edge TE_{retract} in this state.

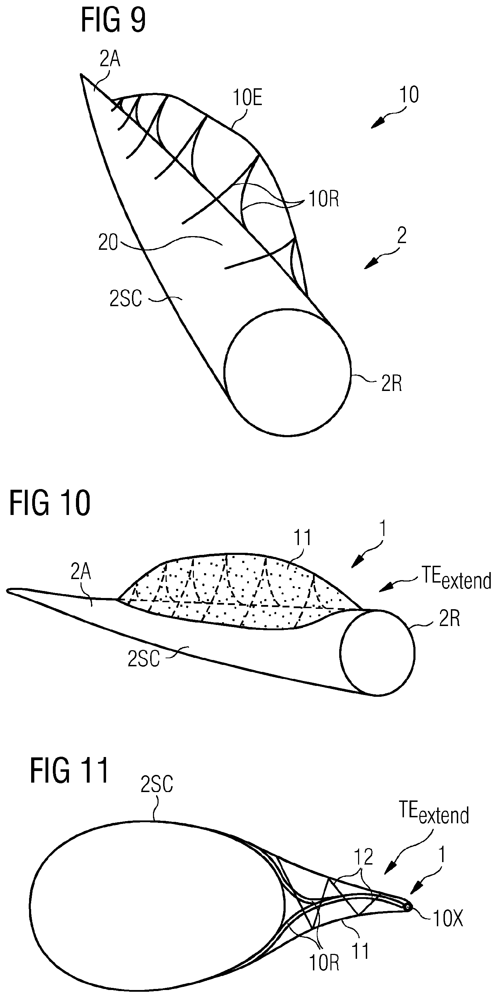

Figs 9 - 11 show another embodiment of the inventive trailing edge assembly 1 mounted along a trailing edge surface 20 of the short-chord portion 2SC of a long rotor blade 2 of the type described in Fig 2 above. Fig 9 shows that this embodiment uses an inflatable support structure 10 comprising an arrangement of inflatable ribs 10R and an inflatable edge hose 10E to define the outer shape of the inflated trailing edge TE_{extend}. Pressurized air or gas is channelled into the inflatable hoses 10R, 10E to make them expand, and Fig 10 indicates the resulting shape as constrained by the outer flexible skin 11. Fig 11 shows a shape-definition mesh 12, in this case an arrangement of constraining wires 12 or cords 12 arranged in the interior of the trailing edge assembly 1. These wires 12 constrain the outward displacement of the flexible skin 11 to maintain a smooth trailing edge shape.

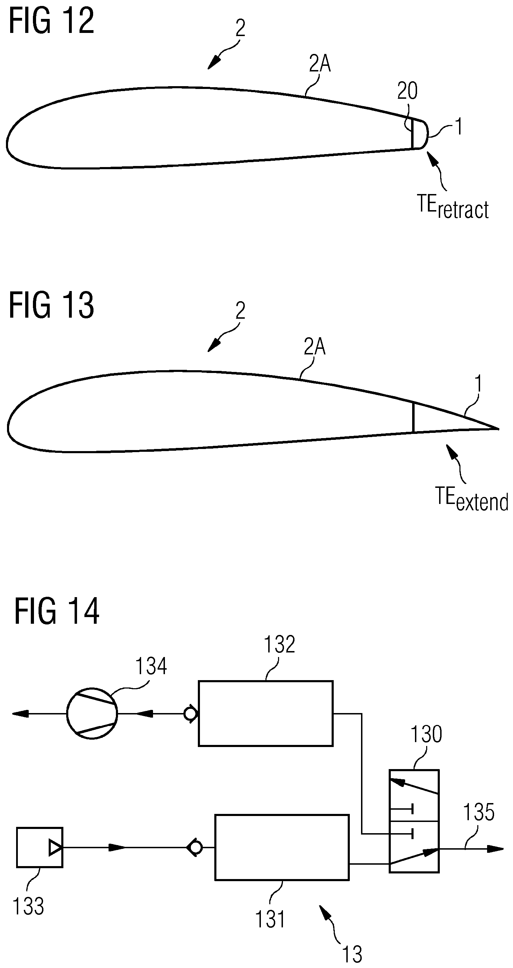

Figs 12 and 13 show the inventive trailing edge assembly 1 mounted to a flat trailing edge surface 20 of the airfoil 2A of a rotor blade 2. Fig 12 shows the trailing edge assembly 1 in its retracted state TE_{retract}. This state may be preferred during an idling state of the wind turbine. Fig 13 shows the trailing edge assembly 1 in its extended state TE_{extend}. This state may be preferred during normal operation of the wind turbine, which can then extract as much energy as possible from the wind.

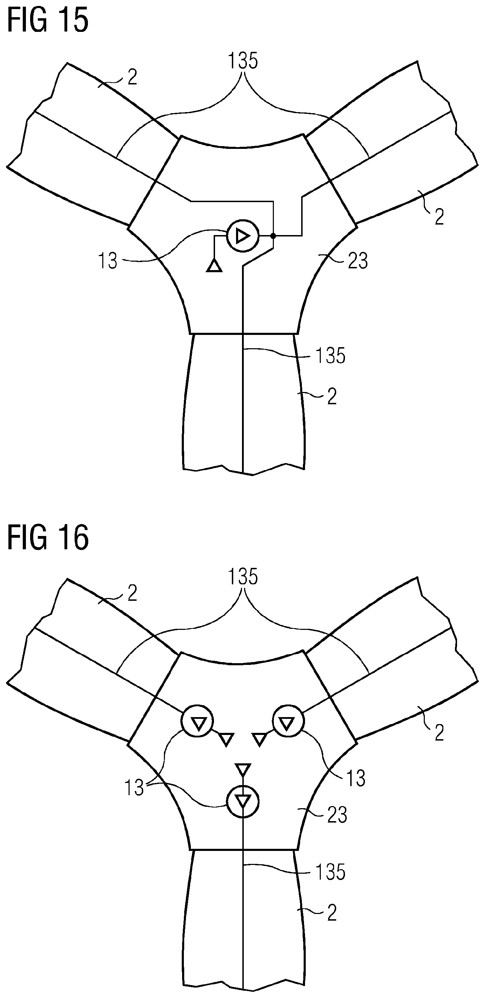

Figs 14 and 15 illustrate the operation of a volume control means 13 for an embodiment of the inventive trailing edge assembly. A pressure supply or pump 133 can be used to fill a pressurized tank 131 or cylinder with a gas such as air. A regulator valve 130 can be controlled to release the pressurized gas into a hose 135 connected to the inflatable elements of one or more trailing edge assemblies as described in Figs 3 - 13 above.

A vacuum pump 134 and vacuum reservoir 132 can be used to extract air from the inflatable elements whenever the trailing edge assembly is to be retracted, in which case the regulator valve 130 can be actuated to allow the gas to be extracted from the inflatable elements through hose 135.

Figs 15 and 16 show alternative realisations regarding the volume control means 13. In Fig 15, a single volume control means 13 can be used to supply three trailing edge assemblies (indicated by the three hoses 135 leading to the rotor blades 2). In Fig 16, a volume control means 13 is provided for each trailing edge assembly.

Although the present invention has been disclosed in the form of preferred embodiments and variations thereon, it will be understood that numerous additional modifications and variations could be made thereto without departing from the scope of the invention. For example, while the chord-adjustable trailing edge assembly described above is particularly suited to improving the aerodynamic performance in the root region of a long rotor blade with a relatively narrow underlying shape in the inboard region, it can equally be used on other rotor blade geometries to provide an adjustable trailing edge, and may be mounted along any truncated or flat trailing edge surface at any inboard or outboard region of a rotor blade. Furthermore, the invention is not restricted to using a gas-based inflation system, and it shall be understood that any suitable means of inflating or deflating a support structure can be deployed.

For the sake of clarity, it is to be understood that the use of "a" or "an" throughout this application does not exclude a plurality, and "comprising" does not exclude other steps or elements.

## Claims

1. A wind turbine rotor blade (2) comprising a root end (2R), an airfoil (2A), and a transition region (2SC) extending between the root end (2R) and the airfoil (2A), further comprising
a chord-adjustable trailing edge assembly (1) extending over at least a portion of the transition region (2SC), which chord-adjustable trailing edge assembly (1) comprises
- an inflatable support structure (10);
- a flexible material (11) arranged to cover the inflatable support structure (10)so as to form an outer flexible skin;and
- an interface (135) to a volume control means (13) realised to adjust the volume of the inflatable support structure (10) to extend a chord length (Cₑₓₜ) of the transition region (2SC);
wherein the rotor blade (2) has a length of at least 80 m or more.

2. A wind turbine rotor blade according to claim 1, wherein the flexible material (11) comprises an elastic material.

3. A wind turbine rotor blade according to claim 1 or claim 2, wherein the inflatable support structure (10) is realised to extend the chord (Cₑₓₜ) in the transition region (2SC) by at least 10%, more preferably at least 25%.

4. A wind turbine rotor blade according to any of the preceding claims, wherein the inflatable support structure (10) comprises a plurality of inflatable elements (10H) arranged to lie in a longitudinal direction along a trailing edge surface (20) of the rotor blade (2).

5. A wind turbine rotor blade according to any of the preceding claims, wherein the inflatable support structure (10) comprises a plurality of inflatable elements (10S, 10R, 10E) connected to form an inflatable framework and mounted over a trailing edge surface (10) of the rotor blade (2).

6. A wind turbine rotor blade according to any of the preceding claims, wherein an inflatable element (10H, 10S, 10R, 10E, 10X) comprises an elongate flexible hose connected to a supply of compressed gas.

7. A wind turbine rotor blade according to any of the preceding claims, wherein an inflatable element (10H) of the support structure (10) is bonded to an adjacent inflatable element (10H).

8. A wind turbine rotor blade according to any of the preceding claims, comprising a shape-definition mesh (12) in the interior of the chord-adjustable trailing edge assembly (1).

9. A wind turbine comprising a number of rotor blades (2) according to any of claims 1 to 8.

10. A wind turbine according to claim 9, wherein the volume control means (13) comprises a vessel (131) for storing pressurized gas.

11. A wind turbine according to claim 9 or claim 10, wherein the volume control means (13) comprises a regulator (130) to regulate the quantity of pressurized gas released into the inflatable support structure (10).

12. A wind turbine according to any of claims 9 to 11, wherein the volume control means (13) comprises a vacuum extraction means (132, 134) for extracting gas from the inflatable support structure (10).

13. A wind turbine according to any of claims 9 to 12, wherein the volume control means (13) is realised as a unit of a wind turbine controller.

14. A method of adjusting a chord length (C, Cₑₓₜ) of a wind turbine rotor blade (2) according to any of claims 1 to 8, which method comprises
- detecting a situation permitting a longer chord (Cₑₓₜ) in the transition region (2SC), and inflating the support structure (10) to extend the chord length; and/or
- detecting a situation requiring a shorter chord (C) in the transition region (2SC), and deflating the support structure (10) to shorten the chord length.

## Patentansprüche

1. Windturbinenrotorblatt (2), umfassend ein Wurzelende (2R), ein Flügelprofil (2A) und einen Übergangsbereich (2SC), der sich zwischen dem Wurzelende (2R) und dem Flügelprofil (2A) erstreckt, ferner umfassend:
eine sehnenlängenverstellbare Hinterkantenanordnung (1), die sich über mindestens einen Teil des Übergangsbereichs (2SC) erstreckt, wobei die sehnenlängenverstellbare Hinterkantenanordnung (1) umfasst:
- eine aufblasbare Stützstruktur (10);
- ein flexibles Material (11), das so angeordnet ist, dass es die aufblasbare Stützstruktur (10) bedeckt und eine äußere flexible Haut bildet; und
- eine Schnittstelle (135) zu einem Volumensteuerungsmittel (13), das dazu ausgelegt ist, das Volumen der aufblasbaren Stützstruktur (10) anzupassen, um eine Sehnenlänge (Cₑₓₜ) des Übergangsbereichs (2SC) zu verlängern;
wobei das Rotorblatt (2) eine Länge von mindestens 80 m oder mehr aufweist.

2. Windturbinenrotorblatt nach Anspruch 1, wobei das flexible Material (11) ein elastisches Material umfasst.

3. Windturbinenrotorblatt nach Anspruch 1 oder Anspruch 2, wobei die aufblasbare Stützstruktur (10) dazu ausgelegt ist, die Sehnenlänge (Cₑₓₜ) im Übergangsbereich (2SC) um mindestens 10 %, bevorzugt mindestens 25 %, zu verlängern.

4. Windturbinenrotorblatt nach einem der vorhergehenden Ansprüche, wobei die aufblasbare Stützstruktur (10) eine Vielzahl von aufblasbaren Elementen (10H) umfasst, die so angeordnet sind, dass sie in Längsrichtung entlang einer Hinterkantenoberfläche (20) des Rotorblatts (2) liegen.

5. Windturbinenrotorblatt nach einem der vorhergehenden Ansprüche, wobei die aufblasbare Stützstruktur (10) eine Vielzahl von aufblasbaren Elementen (10S, 10R, 10E) umfasst, die zu einem aufblasbaren Rahmen verbunden und über einer Hinterkantenoberfläche (10) des Rotorblatts (2) montiert sind.

6. Windturbinenrotorblatt nach einem der vorhergehenden Ansprüche, wobei ein aufblasbares Element (10H, 10S, 10R, 10E, 10X) einen länglichen flexiblen Schlauch umfasst, der mit einer Druckgasversorgung verbunden ist.

7. Windturbinenrotorblatt nach einem der vorhergehenden Ansprüche, wobei ein aufblasbares Element (10H) der Stützstruktur (10) mit einem benachbarten aufblasbaren Element (10H) verbunden ist.

8. Windturbinenrotorblatt nach einem der vorhergehenden Ansprüche, umfassend ein formgebendes Netz (12) im Inneren der sehnenlängenverstellbaren Hinterkantenanordnung (1).

9. Windturbine, umfassend eine Anzahl von Rotorblättern (2) nach einem der Ansprüche 1 bis 8.

10. Windturbine nach Anspruch 9, wobei das Volumensteuerungsmittel (13) ein Gefäß (131) zum Speichern von Druckgas umfasst.

11. Windturbine nach Anspruch 9 oder Anspruch 10, wobei das Volumensteuerungsmittel (13) einen Regler (130) umfasst, um die Menge des in die aufblasbare Stützstruktur (10) abgegebenen Druckgases zu regeln.

12. Windturbine nach einem der Ansprüche 9 bis 11, wobei das Volumensteuerungsmittel (13) ein Vakuumentnahmemittel (132, 134) zum Entnehmen von Gas aus der aufblasbaren Stützstruktur (10) umfasst.

13. Windturbine nach einem der Ansprüche 9 bis 12, wobei das Volumensteuerungsmittel (13) als Einheit einer Windturbinensteuervorrichtung ausgestaltet ist.

14. Verfahren zum Einstellen einer Sehnenlänge (C, Cₑₓₜ) eines Windturbinenrotorblatts (2) nach einem der Ansprüche 1 bis 8, wobei das Verfahren umfasst:
- Erfassen einer Situation, die eine längere Sehne (Cₑₓₜ) im Übergangsbereich (2SC) zulässt, und Aufblasen der Stützstruktur (10), um die Sehnenlänge zu verlängern; und/oder
- Erfassen einer Situation, die eine kürzere Sehne (C) im Übergangsbereich (2SC) erfordert, und Entleeren der Stützstruktur (10), um die Sehnenlänge zu verkürzen.

## Revendications

1. Pale de rotor d'éolienne (2) comprenant une extrémité d'emplanture (2R), un profil aérodynamique (2A) et une zone de transition (2SC) s'étendant entre l'extrémité d'emplanture (2R) et le profil aérodynamique (2A), comprenant en outre
un ensemble de bord de fuite à corde réglable (1) s'étendant sur au moins une partie de la zone de transition (2SC), lequel ensemble de bord de fuite à corde réglable (1) comprend
- une structure de support gonflable (10) ;
- un matériau flexible (11) agencé pour couvrir la structure de support gonflable (10) de manière à former une peau extérieure flexible ; et
- une interface (135) avec un moyen de commande de volume (13) réalisée pour régler le volume de la structure de support gonflable (10) afin d'étendre une longueur de corde (Cₑₓₜ) de la zone de transition (2SC) ;
dans laquelle la pale de rotor (2) a une longueur supérieure ou égale à au moins 80 m.

2. Pale de rotor d'éolienne selon la revendication 1, dans laquelle le matériau flexible (11) comprend un matériau élastique.

3. Pale de rotor d'éolienne selon la revendication 1 ou 2, dans laquelle la structure de support gonflable (10) est réalisée pour étendre la corde (Cₑₓₜ) dans la zone de transition (2SC) d'au moins 10 %, de préférence d'au moins 25 %.

4. Pale de rotor d'éolienne selon l'une des revendications précédentes, dans laquelle la structure de support gonflable (10) comprend une pluralité d'éléments gonflables (10H) agencés pour se situer dans une direction longitudinale le long d'une surface de bord de fuite (20) de la pale de rotor (2).

5. Pale de rotor d'éolienne selon l'une des revendications précédentes, dans laquelle la structure de support gonflable (10) comprend une pluralité d'éléments gonflables (10S, 10R, 10E) reliés pour former une ossature gonflable et montés sur une surface de bord de fuite (10) de la pale de rotor (2).

6. Pale de rotor d'éolienne selon l'une des revendications précédentes, dans laquelle un élément gonflable (10H, 10S, 10R, 10E, 10X) comprend un tuyau flexible allongé relié à une alimentation en gaz comprimé.

7. Pale de rotor d'éolienne selon l'une des revendications précédentes, dans laquelle un élément gonflable (10H) de la structure de support (10) est lié à un élément gonflable adjacent (10H) .

8. Pale de rotor d'éolienne selon l'une des revendications précédentes, comprenant un maillage de définition de forme (12) à l'intérieur de l'ensemble de bord de fuite à corde réglable (1).

9. Éolienne comprenant un certain nombre de pales de rotor (2) selon l'une des revendications 1 à 8.

10. Éolienne selon la revendication 9, dans laquelle le moyen de commande de volume (13) comprend un réservoir (131) pour le stockage de gaz sous pression.

11. Éolienne selon la revendication 9 ou 10, dans laquelle le moyen de commande de volume (13) comprend un régulateur (130) pour réguler la quantité de gaz sous pression libérée dans la structure de support gonflable (10).

12. Éolienne selon l'une des revendications 9 à 11, dans laquelle le moyen de commande de volume (13) comprend un moyen d'extraction sous vide (132, 134) pour extraire le gaz de la structure de support gonflable (10).

13. Éolienne selon l'une des revendications 9 à 12, dans laquelle le moyen de commande de volume (13) est réalisé en tant qu'unité d'un dispositif de commande d'éolienne.

14. Procédé de réglage de la longueur de corde (C, Cₑₓₜ) d'une pale de rotor d'éolienne (2) selon l'une des revendications 1 à 8, lequel procédé comprend
- la détection d'une situation permettant une corde plus longue (Cₑₓₜ) dans la zone de transition (2SC), et le gonflage de la structure de support (10) pour étendre la longueur de corde ; et/ou
- la détection d'une situation nécessitant une corde plus courte (C) dans la zone de transition (2SC), et le dégonflage de la structure de support (10) pour raccourcir la longueur de corde.
